# EUROPEAN PATENT APPLICATION

(11) **EP 0 631 230 A2**
(43) Date of publication of application: **28.12.1994**
(21) Application number: 94109012.8
(22) Date of filing: 13.06.1994
(51) Int. Cl.: G06F 9/44

(54) **A method for displaying a form according to a form description**

(30) Priority: 14.06.1993 US 75979
(71) Applicant: INFO ENTERPRISES, INC., Phoenix, Arizona 85008 (US)
(72) Inventor: Engelman, Paul D., Tempe, Arizona 85284 (US)
(74) Representative: Hudson, Peter David

(57) **Abstract**

A method is provided for creating and displaying a form from a description of how the form is laid-out, structured or organized. The form description is stored in separate file from the source code and executed object code of the software program executing the method. The form description includes a description of each of the elements in the form. Each of the elements may include a description of its position on a form and how it should appear when it is displayed.

## Description

### Technical Field

This invention relates generally to user interface methods for displaying a variety of different forms and, in particular, to a method for displaying forms from a description of a layout, arrangement or organization of elements on the form.

### Background of the Invention

Conventional user interface methods usually embed or "hardwire" the layout, structure or organization of data-entry forms directly into the source code of a software program. The only way to add a new form or change or modify an existing form is to add to or change the source code itself; hence, a software program has to be recompiled every time any additions or changes are made to any of the forms. Therefore, if a completely new form is added or a minor change is made to the layout of an existing form, the process of recompiling the source code into executable machine-readable code may consume and waste a large amount of time.

Accordingly, there exists a significant need for a method which can add new forms or modify existing forms without modifying the source or object code of a software program.

### Summary of the Invention

The present invention has utility in interpreting a description of a form, menu or template in order to create and display a form requested by a user. The form description or layout of a form can be stored separately from a source code version and an executable version of the software which is executing the method. Thus, any of the data-collection forms can be updated or modified without having to modify any source or object code.

The method retrieves a form description from a central location and interprets the form description to create and display the selected form, menu or template. Each of the data-entry forms are described by a number of elements. Each of the elements may include a description of its position on a form and how it should appear when it is displayed, such as its dimensions, color or shading, for example. There is no standard format for describing the forms.

Once the form is displayed based on the form description, a user can enter data into the form. As data is entered, real-time error checking is performed on the data to make sure it is within an acceptable range. The range or limits of the data are also downloaded with the form description.

Thus, it is an advantage of the present invention that the layout, structure and organization of a form does not have to be embedded or hardwired into the source or object code of a software program.

Another advantage of the present invention is to allow a user to select a form and display the form from a description of the form.

It is also an advantage of the present invention to add new features to a form or change the layout, structure or organization of a form without recompiling the source code of a software program.

Another advantage of the present invention is to provide flexibility in the creation, storage and maintenance of a form system.

Yet another advantage of the present invention is to centralize data handling in a network system using a main or remote computer via a network to distribute the forms.

It is also an advantage of the present invention that forms, menus and templates can be stored at one location rather than stored at all of the individual workstations of a large, multi-networked system.

Another advantage of the present invention is that memory of each of the workstations is available for storing other data and information, since none of the workstations have to store any of the forms.

Yet another advantage of the present invention is that each form is available on any computer system and the size of the executable software program for accessing, interpreting, creating and displaying the forms remains relatively small and manageable since it does not include any of the forms.

It is also an advantage of the present invention to provide a way for a user to enter data into a form.

According to one aspect of the invention, a method is provided which is executed by a computer as part of a computer program. The method display a form according to a form description. The form comprises a plurality of elements. The method comprises the steps of:
(a) interpreting how to draw said elements from said form description;
(b) creating said form based on said interpretation is step (a); and (c) displaying said form.

### Brief Description of the Drawings

The invention is pointed out with particularity in the appended claims. However, other features of the invention will become more apparent and the invention will be best understood by referring to the following detailed description in conjunction with the accompanying drawings in which:
FIG. 1 shows a network system according to a preferred embodiment of the present invention;
FIG. 2 shows an example of one of forms according to a preferred embodiment of the present invention;
FIG. 3 shows a flowchart of a method for interpreting, creating and displaying a form from a form description according to a preferred embodiment of the present invention;
FIG. 4 shows a choice or button element according to a preferred embodiment of the present invention;
FIG. 5 shows a cascading menu element according to a preferred embodiment of the present invention;
FIG. 6 shows an option or single selection menu element according to a preferred embodiment of the present invention;
FIG. 7 shows a pop-up menu element according to a preferred embodiment of the present invention;
FIG. 8 shows a text-input element according to a preferred embodiment of the present invention;
FIG. 9 shows an example of a layout of some elements or attachments according to a preferred embodiment of the present invention; and
FIG. 10 shows a flowchart for how a form description is interpreted and created according to a preferred embodiment of the present invention.

### Description of the Preferred Embodiments

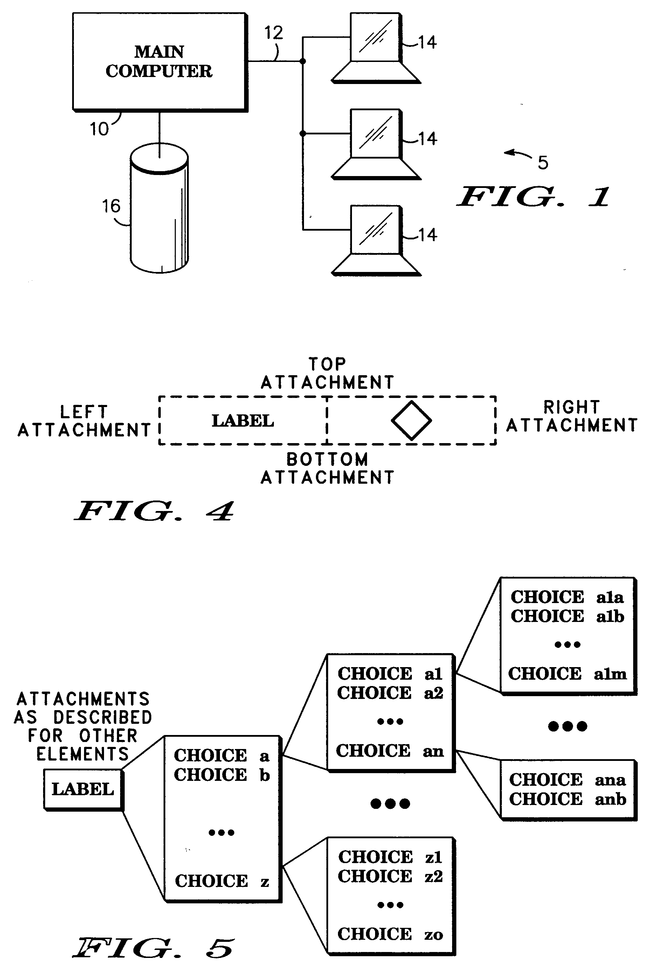

FIG. 1 shows a network system 5 according to a preferred embodiment of the present invention. In FIG. 1, main computer 10 is connected over a network 12 to a number of workstations 14. Main computer 10 is also connected to database 16. Although main computer 10 is preferred to be a Sun 690 which is commercially available from Sun Microsystems, Inc., any type of commercially available computer is acceptable. Main computer 10 is responsible for retrieving any form, menu or template description from database 16.

Network 12 is any type of network connection between computer 10 and workstations 14, including, but not necessarily limited to, local-area-networks, optical fiber networks or coaxial communication cables. Workstations 14 are any type of computer including any of the personal computers commercially available from Sun, IBM, Apple or any other computer manufacturer. Each personal computer or workstation 14 usually contains some type of display monitor, a keyboard, a mouse and some type of processing and memory capabilities.

Database 16 can be either an external storage device as shown in FIG. 1 or an internal storage device. Moreover, database 16 could be connected directly to any of the workstations 14 rather than to main computer 10 as shown in FIG. 1. Database 16 stores all of the forms, menus and templates which a user may request.

Although network system 5 has the configuration shown in FIG. 1, network system 5 can also have any type of hardware configuration, including multiple main computers 10 connected to hundreds of workstations 14 via a number of different networks 12, for example. Moreover, network system 5 may only comprise a single workstation 14 which locally executes a method for interpreting, creating and displaying forms based on the description of the form.

Although the term "form" is referred to throughout this specification, "form" could also mean, but is not necessarily limited to, one of a number of different menus, templates or any presentation of data in any organized form or any structured format, including insurance forms, medical forms, job application forms, registration forms or driver's license application forms, for example. Moreover, the form could be a search template form where the search template contains a variety of different fields. A user can select one or more of the fields, input data into the selected fields and perform a search based on the data entered by the user. Therefore, although the term "form" will be continued to be used throughout this specification, "form" broadly encompasses many different types of forms, templates, forms or presentations of data in any type of format or fashion.

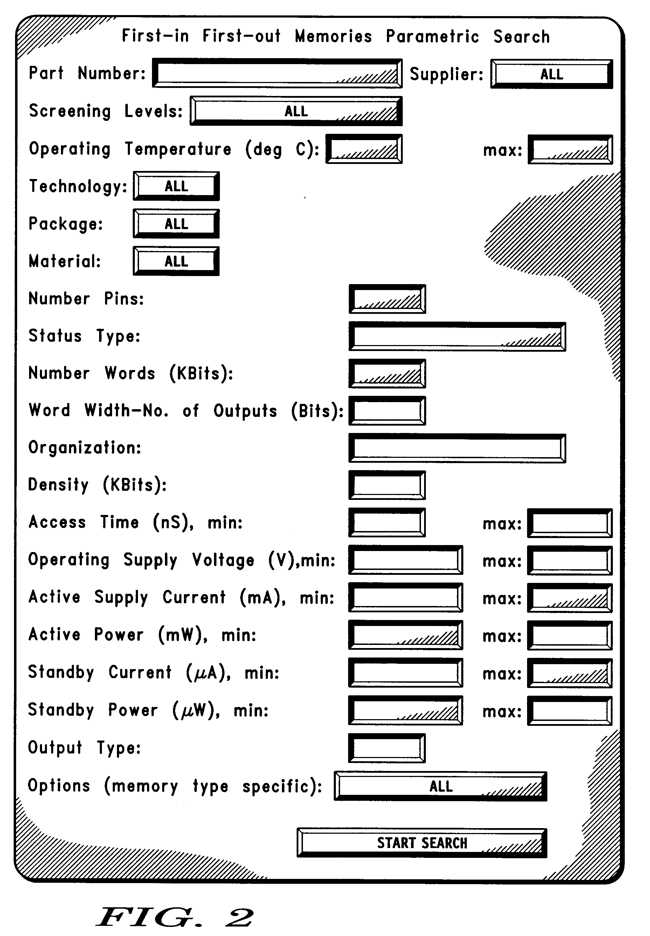

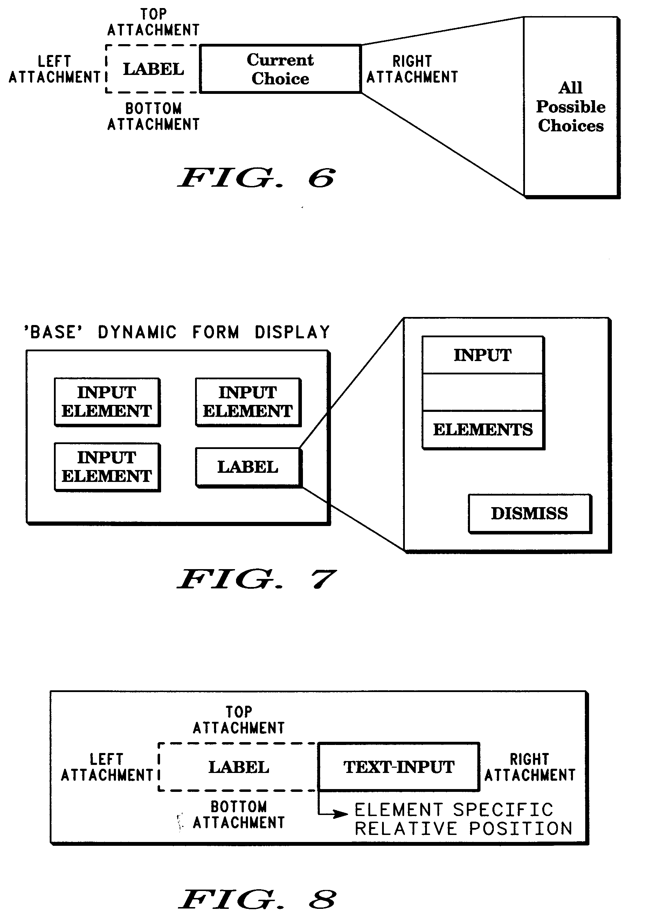

FIG. 2 shows an example of a template search form displayed by a method in accordance with a preferred embodiment of the present invention. A template search is where a user can enter information into a form and perform a search based on the entered search terms. As shown in FIG. 2, the form includes a variety of elements or fields. Each element in the form (i.e., "Part Number", "Technology", Number Pins" and "Access Time") may represent a data field in which a user can select or enter data or information.

The form shown in FIG. 2 will be used to perform a search for "First-in First-out Memory" devices based on any search data entered by a user. For example, a user can select the "Number Pins" box shown in FIG. 2 by using a mouse, enter or type-in a number by using a keyboard and then select "start search". Workstation 14 will transmit a search request across network 12 to main computer 10 to search for any first-in, first-out memory devices which only have the selected number of pins. Main computer 10 will examine any of its databases to find any memory devices which match the user's search request and will transmit the results to the user's workstation 14. Workstation 14 will display any of the memory devices found by main computer 10 that match the terms entered by the user.

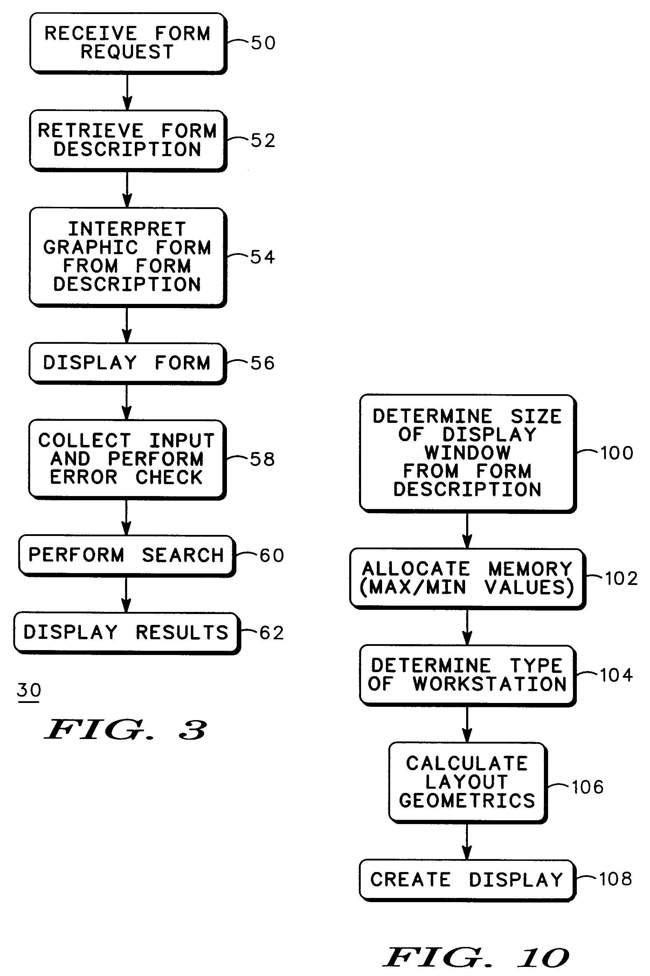

FIG. 3 shows a method 30 for interpreting form descriptions and for creating and displaying forms according to a preferred embodiment of the present invention. However, before method 30 starts to execute each of the steps shown in the flowchart of FIG. 3, a few preliminary requirements have to met. First, a user needs to define how each of the forms, menus and/or templates are going to be generically described in the form description. In other words, a common element description needs to be developed by a software engineer which describes the layout, structure or organization of a form, regardless of whether the description is for a menu, form or template. One of the many conventions that could be used is described below in this specification. Since there is no commercially or commonly acceptable way to describe the layout of a form, template or menu, such generic descriptions can be personally defined and customized by the software engineer.

Second, the layout descriptions have to be stored in some type of accessible memory device. For example, in the preferred embodiment of the present invention, layout descriptions of all the forms, menus and templates are stored in database 16 by using Sybase™ (Sybase is a trademark of Sybase Corporation). Sybase is a commercially available software program for storing and retrieving in an efficient manner blocks of information from a database. Sybase also assigns a unique identifier to each form, menu or template. This unique identifier would be used in calling Sybase to obtain a layout description of a form requested by a user. Although Sybase is used to store form descriptions in the present invention, other methods of storing the form descriptions in a database could be used as well.

FIG. 3 shows a flowchart of method 30 which interprets a form description in order to create and display a selected form according to a preferred embodiment of the present invention. Briefly, as shown in FIG. 3, method 30 receives in step 50 a request for a form from a user. Method 30 retrieves a form description corresponding to which form was requested in step 52. In step 54, method 30 interprets the layout of the form based on the retrieved form description and creates the form based on the interpretation of the form description. In step 56, method 30 displays the created form on the user's workstation 14. Method 30 collects any input entered by a user in step 58 and performs an error-check on the input. A search is performed by method 30 in step 60 based on the input entered by the user in step 58, and once the results are received, method 30 displays the results in step 62.

As shown in FIG. 3, method 30 receives a request for a form in step 50. This request may include a request for one of the many different forms, menus, templates or other graphic displays stored in database 16 or some other memory device connected to main computer 10. To reach step 50, a user may have indirectly selected one of the forms or menus associated with the type of application being performed.

A user may be able to directly or indirectly select a form depending on the software program itself. An example of how a user directly selects a form is given in the following example. Suppose an agent of an insurance company wanted to file a claim for one of its customers or wanted to apply for home insurance. The agent would be provided an option of selecting either claim forms or application forms. Once the agent makes a selection, method 30 will then perform a request for the selected form description from database 16 via main computer 10. (Database 16 and main computer 10 could be located in the main headquarters of the insurance company which is accessible by any of its agents across the United States.) Method 30 will then interpret, create and display the form requested by the agent based on the form description received from the insurance company's headquarters.

An example of how a user can indirectly select a form is in a doctor's office, hospital or other medical environment. When a doctor wants to bill a particular insurance company for services rendered to a client, the doctor may select the client's medical insurance provider from a list of insurance providers. This information or the medical insurance provider is used as a request for a claims form from the selected medical insurance provider. The doctor does not have know what form to select from database 16, but only needs to know the name of the medical insurance provider.

Once method 30 receives a request for a specific form in step 50, method 30 retrieves in step 52 a form description from database 16. In order to retrieve a form description from database 16 according to preferred embodiment, method 30 has to determine what unique form identifier is associated with the requested form. This unique form identifier is assigned by Sybase when the specific form, menu or template was designed by a software engineer and stored in database 16 via Sybase. For example, if a user selects a particular insurance form for State Farm Insurance, a table containing a cross-reference between the State Farm Insurance form and the corresponding Sybase unique form identifier could be referenced. There are other commonly known method which can be used for determining the unique form identifier for a selected form, menu or template, such as linked-lists or hierarchical tree structures, for example.

In step 52, method 30 retrieves the form description from database 16 based on the unique form identifier. The form description includes a number of individual elements. Each of the elements may include a description of its position on a form and how it should appear when it is displayed, including it size, dimensions, color, shape and shading, for example. As stated above, the form description can be customized or defined according to a software engineer's personal preferences.

Each element in a form description according to a preferred embodiment of the present invention has the following basic format or element description:
**〈nmbr〉 〈type〉:〈element specific parameters〉 〈optional parameter〉**
In the element description, 〈nmbr〉 refers to an ordering of an element in a list of elements for a particular form description. In other words, this number is used only to list in some type of organized fashion the different elements in a form description. There is no set number of elements for each form description so that there may be five, fifteen or sixty different elements for each form description, for example.

An element 〈type〉 is a description of a particular element's individual characteristics or features. An element may be any of the following types although not necessarily limited to those listed:

| **Type** | **Description of element** |
|---|---|
| c | Choice button or toggle-type button |
| h | Heading |
| m | Cascading or pull-right menu |
| o | Option menu or single selection list |
| p | Pop-up menu |
| s | Separator |
| t | Text-input |

### TYPE LIST

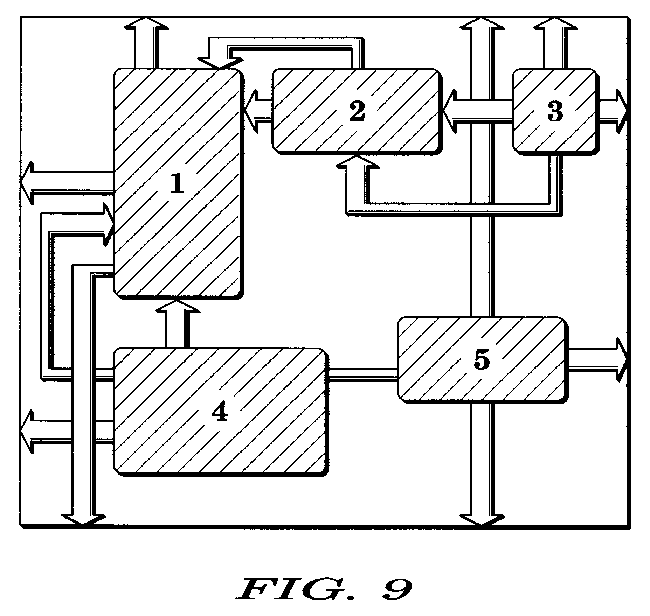

A choice element ("c") is a choice button or a toggle button as shown in FIG. 4. For a choice element, a user can pick between one of two states, usually on or off. A "label" is displayed next to a push-button, such as a diamond shown in FIG. 4, for example. By selecting the diamond, a user can toggle the state of the choice attached to the "label". A description of a choice element comprises default parameters of the choice element, a "label" text, whether the "label" will be to the left or to the right of the push-button or actual data-entry field and whether the "label" should be centered, left-justified or right justified in the display area.

A heading element ("h"), is a title or header to a page, such as the heading "FIRST-In First-Out Memories Parametric Search" shown at the top of the form in FIG. 2. A heading element displays a text as a header. A description of the heading element comprises the text that is to be displayed and the position of the text on the form including whether the text is centered, left-justified or right-justified.

A cascading or pull-right menu element ("m") is displayed as shown in FIG. 5. The menu shown in FIG. 5 allows cascading of more menus and "choices" from the "label". Each menu can have a different number of entries or "choices". Subsequent choices in any of the cascaded menus are controlled by the choice at a previous level in the menu. A description of a menu element comprises a description of menu entries, subsequent levels and new element specific entries. Moreover, the menu element description also comprises text of the "label" and the position and orientation of the "label" on the form.

An option element ("o") permits a user to make a single choice from a "list" of all possible choices as shown in FIG. 6. An option element displays a "current choice" that was made when the menu is not active. A description of the option element comprises a text for the "label", a position of the "label" on the form, the number of entries that will be displayed in the list and a field name for the list.

A pop-up element ("p") is shown in FIG. 7 and is a menu that is not normally displayed. In order to display a pop-up menu, a user must select the pop-up menu by depressing a button via a mouse, for example. A description of the pop-up element comprises a number of elements in the pop-up, a number of the last element in the form description that is in the pop-up, a text for the label of the button and the position and orientation of the label.

A separator element ("s") describes how lines will be drawn on a form. A description of a separator element comprises whether the separator is oriented in the horizontal or vertical direction, the style of the separator and the width of a separator. Some of the possible styles are a shadow-in line, a shadow-out line, a single/solid line, a single/dashed line, a double/solid line and a double/dashed line, for example. As shown in FIG. 2, there are three separator lines. Two lines surround the header. Both of these solid lines are in the horizontal direction. The other horizontal line is a dashed line which is shown below "Part Number" and "Supplier" in FIG. 2.

The text-input element ("t") provides an input area on the display monitor where a user can input information as shown in FIG. 8. A text-input element description-includes the actual text of the label and the position and orientation of the text on the form.

Each element that can accept input from the user such as the text-input element has associated with it a field name (FN). This field name corresponds to the attribute name in a database. This allows values to be retrieved from a database at the time the form is fetched and are used to set-up minimum and maximum values. Also, each of these elements has a label/text position description which specifies whether the label for a text input field will be to the left or the right of the actual data-entry field and whether the label should be centered, left-justified or right-justified in its display area.

For all these elements, certain "optional" parameters apply. The following are a listing of some of the optional parameters:

| **Optional parameter** | **Description** |
|---|---|
| a | Attachment (absolute and relative position of one element to another element); |
| c | Foreground color (e.g., the color of window); |
| b | Background color (e.g., the basic color of a pop-up and the pop-ups button); |
| h | Help description for this particular element, (i.e., context-sensitive help). |

An attachment ("a") option specifies or defines the position of elements relative to other elements or boundaries of a form. The boundaries of the form and the relative position starts with the upper-left corner. Each element in a form description comprises a sequence that looks like the following:
a: top, left, right, bottom
This is an attachment for that element, where "a" signifies an attachment, followed by the four fields that specify its relative or absolute position on a form. An attachment may have one of following four different positioning possibilities: (1) absolute position on the form; (2) relative position on the form; (3) top-to-bottom, left-to-right, bottom-to-top or right-to-left attachment to another element; or (4) top-to-top, bottom-to-bottom, left-to-left or right-to-right attachment to another element.

Absolute position on a form is denoted by f〈number〉, where number represents the number of pixels from the respective edge of the form. Relative position on a form is denoted by p〈number〉, where number represents the percentage of the overall/height/width of the form that the edge of the element will be from the edge of the form. As the form is shrunk or expanded, the actual position of the element in the form will be adjusted so that it maintains that relative position.

Top-to-bottom, left-to-right, bottom-to-top or right-to-left attachment to other elements are denoted by a w〈number〉〈offset-number〉. Number represents the number of an element in the form description list while offset-number represents an number of pixels to offset.

Top-to-top, bottom-to-bottom, left-to-left or right-to-right attachment are denoted by o〈number〉〈offset-number〉.

FIG. 9 shows five elements in one form. For the elements shown in FIG. 4, the form description would be the following:
1 . . . a:f20,p10, ,p40
2 . . . a:o1,w1o30,,
3 . . . a:f20,w2o40,f30,o2
4 . . . a:w1,p10,,
5 . . . a:p65,p85,p90,p80
Element 1 will be placed 20 pixels from the top, 10% of the total width of the bounding form from the left and 40% of the total height of the form from the bottom. As the form is resized via a mouse, the top of element 1 will always stay 20 pixels from the top of the form. However, the left and bottom of the form will adjust so that its edges are 10% from the left and 40% from the bottom whenever the size of the window is redrawn and redisplayed.

Element 2 will be placed on the form so that its top edge is "even" with the top edge of element 1. The left edge of element 2 will be attached to the right edge of element 1 with the addition of 30 pixels which is the specified offset number. The attachments for the right and bottom are not defined and thus will default to zero so that their position is dictated by the size of the element when it is created.

The top edge of element 3 will be positioned 20 pixels from the top of the bounding form. The left edge of element 3 is attached to the right edge of element 2 with an additional offset of 40 pixels. The right edge of element 3 will be placed so that it is 30 pixels from the right edge of the bounding form. The bottom edge of element 3 will be attached to the bottom edge of element 2. Therefore, when the form is resized, the top edge will remain 20 pixels from the top of the form, the left edge will remain 40 pixels from the right edge of element 2 if element 2 moves. Moreover, if the right edge of element 2 moves, then the left edge of element 3 will also move and the bottom of element 3 will remain even with the bottom of element 2.

Element 4 is similar to those described above, while the position of element 5 is independent of any other elements and will remain in its relative position regardless of how the form is positioned.

Returning to the method shown in FIG. 3, once method 30 retrieves a form description from database 16, method 30 interprets in step 54 each element description to create a graphic display of the user selected form. The flowchart shown in FIG. 10 are the steps taken by method 30 to interpret each element in the form description and create the requested form.

According to FIG. 10, method 30 first determines in step 100 a size of a display window from the retrieved form description. The size of the display window is important for determining absolute and relative positioning of elements on a form. In step 102, method 30 allocates memory space for each internal variable given from any of the element descriptions. The internal variables may include such values as maximum and minimum values of some of the element fields, for example.

Once memory space has been allocated for each element variable in step 102, method 30 determines in step 104 the type of workstation 14 from which the user made the form request. As explained above, workstation 14 can be any commercially available computer including any personal computer. It is important to know the resolution of the screen and whether the form can be reproduced on the user's workstation. Method 30 determines the limitations of the display monitor and calculates the layout geometries in step 106 based on the type of workstation 14 and size of display window. This calculation performed by method 30 translates any relative position of an element to an absolute position on the form.

Method 30 usually begins with the first element description in the form description and determines or calculates where to place the element based on an origin point which is usually (0,0) or the upper left-hand corner. Once the position of the first element is found, the position of the other elements in the form description can also be determined in a similar fashion. After method 30 determines which elements will be displayed on a form and their position on the form, method 30 in step 108 creates a graphic display window and inputs the elements into the window. Once all the elements are loaded into the window, method 30 displays the form on the user's workstation in step 56 of FIG. 3.

Once the form is displayed by method 30 on a user's workstation 14, the user is able to input data into the form. Method 30 reads any data entered by the user, allocates space for storing the inputted data and performs an error-check on the inputted data. The internal form structures created by method 30 in step 102 of FIG. 10 contain maximum and minimum values. If the data entered by the user falls outside of the maximum and minimum values, an error message is displayed on the user's display monitor. The user can retry to enter correct data which falls within the maximum and minimum values.

Once valid data is entered by the user in step 58 of the flowchart of FIG. 3, method 30 will perform a search or some other type of function based upon the data entered by a user in step 60. There are many different type of applications which can be performed on the data, including but not necessarily limited to searching for particular information, storing the data in a database, or compiling statistics based on users' answers to questions, for example.

It will be appreciated by those skilled in the art that the present invention interprets a form description and displays a form based on the form description. It is clear that the present invention does not have to embed any of the forms into the source code of a software program as required by conventional user interface systems.

Accordingly, it is intended by the appended claims to cover all modifications of the invention which fall within the true spirit and scope of the invention.

## Claims

1. A method executed by a computer (14) as part of a computer program for displaying a form according to a form description, said form comprising a plurality of elements, said method comprising the steps of:
(a) interpreting how to draw said elements from said form description;
(b) creating said form based on said interpretation in step (b); and
(c) displaying said form.

2. A method executed by a computer (14) as part of a computer program for displaying a form according to a form description, said form comprising a plurality of elements, said method comprising the steps of:
(a) selecting a form from a plurality of forms;
(b) retrieving a form description based on said form;
(c) interpreting how to draw said elements from said form description;
(d) creating said form based on said interpretation in step (c); and
(e) displaying said form.

3. A method executed by a computer (14) as part of a computer program for displaying a form according to a form description, said form comprising a plurality of elements, said computer connecting to a remote main computer (10) via a network, said form description being stored said main computer, said method comprising the steps of:
(a) selecting a form from a plurality of forms;
(b) retrieving a form description based on said form from said remote main computer across said network;
(c) interpreting how to draw said elements from said form description;
(d) creating said form based on said interpretation in step (c); and
(e) displaying said form.

4. A method executed by a computer(14) as part of a computer program for displaying a form according to a form description, said form comprising a plurality of elements, said method comprising the steps of:
(a) selecting a form from a plurality of forms;
(b) retrieving a form description based on said form;
(c) interpreting how to draw said elements from said form description;
(d) creating said form based on said interpretation is step (c);
(e) displaying said form;
(f) reading input entered into said from;
(g) storing said input;
(h) error checking said input against predetermined values; and
(i) displaying an error message if said input does not fall within said predetermined values.
